# FASCICULE DE BREVET EUROPEEN

(11) **EP 3 964 796 B1**
(45) Date de publication et mention de la délivrance du brevet: **17.01.2024**
(21) Numéro de dépôt: 21191674.7
(22) Date de dépôt: 17.08.2021
(51) Int. Cl.: G01C 21/20, G06Q 10/047, G08G 5/00, G05D 1/00

(54) **PROCÉDÉ ET SYSTÈME D'AIDE À LA NAVIGATION D'UN AÉRONEF, AÉRONEF ASSOCIÉ**
VERFAHREN UND SYSTEM ZUR UNTERSTÜZUNG BEI DER NAVIGATION EINES FLUGZEUGS UND ENTSPRECHENDES FLUGZEUG
METHOD AND SYSTEM FOR ASSISTING WITH THE NAVIGATION OF AN AIRCRAFT, ASSOCIATED AIRCRAFT

(30) Priorité: 03.09.2020 FR 2008941
(43) Date de publication de la demande: 09.03.2022
(73) Titulaire: Airbus Helicopters, 13725 Marignane Cedex (FR)
(72) Inventeur: GIRARD, Rémi, 13800 ISTRES (FR); BELANGER, Nicolas, 13270 FOS SUR MER (FR)
(74) Mandataire: GPI Brevets

(56) Documents cités:
- US-A1- 2016 003 620
- MAO JUN ET AL: "A Bio-Inspired Goal-Directed Visual Navigation Model for Aerial Mobile Robots", JOURNAL OF INTELLIGENT AND ROBOTIC SYSTEMS, KLUWER DORDRECHT, NL, vol. 100, no. 1, 12 mai 2020 (2020-05-12), pages 289-310, XP037236142, ISSN: 0921-0296, DOI: 10.1007/S10846-020-01190-4 [extrait le 2020-05-12]

## Description

La présente invention se rapporte au domaine technique des procédés et des systèmes d'aide à la navigation des aéronefs.

De tels procédés ou systèmes permettent en outre de réduire la charge de travail d'un pilote et/ou d'un copilote d'un aéronef en indiquant par exemple un cap à suivre et/ou en générant des consignes de commandes pour piloter l'aéronef selon un chemin aérien.

De tels aéronefs peuvent par exemple être des avions, des giravions et peuvent présenter un ou plusieurs rotors participant au moins à la sustentation de l'aéronef dans les airs. En outre un tel aéronef peut embarquer à son bord un pilote ou encore peut n'embarquer aucun pilote. Dans le deuxième cas, l'aéronef peut être piloté à distance ou bien être piloté de manière autonome selon un chemin aérien en tout ou partie prédéterminé. Un tel aéronef peut alors notamment être formé par un drone.

Généralement, les procédés et les systèmes d'aide à la navigation des aéronefs utilisent un module récepteur d'un système de géolocalisation par satellites tel que notamment le GPS, acronyme de l'expression en langue anglaise « Global Positioning System », le GLONASS, acronyme de l'expression en langue russe « Globalnaïa Navigatsionnaïa Spoutnikovaïa Sistéma » ou encore le système GALILEO.

Ces systèmes d'aide à la navigation permettent alors d'identifier une position courante d'un aéronef définie par des coordonnées en latitude, en longitude et éventuellement en altitude dans un référentiel terrestre. Connaissant la position courante et une position d'une destination prédéterminée pour la mission de l'aéronef, de tels systèmes d'aide à la navigation permettent alors de fournir au moins un itinéraire ou chemin aérien privilégié par exemple pour limiter la consommation de carburant ou pour éviter des zones potentiellement dangereuses.

En outre, de tels systèmes d'aide à la navigation peuvent cependant tomber en panne ou encore leur précision peut être perturbée par un nombre réduit de satellites en orbite « visibles » de l'aéronef lors de sa mission. De plus, des systèmes de brouillage peuvent également gêner, voire empêcher la réception des signaux émis par les différents satellites.

Le manque de précision et/ou la perte de réception de ces signaux peut alors se révéler critique pour l'aéronef qui peut être contraint d'écourter sa mission ou encore de se poser en urgence.

Par ailleurs, on connaît également, tels que décrits dans le document WO2018102559, des véhicules aériens sans pilote ou drones équipés de systèmes de commande de vol et, plus particulièrement, de systèmes de navigation basés sur la vision.

De tels systèmes utilisent ainsi au moins une caméra pour se repérer dans l'espace. Ils permettent de prédire si les caractéristiques visuelles identifiables dans le futur seront suffisamment nombreuses. Ces systèmes permettent alors de limiter une zone de vol de la mission par rapport à des instructions de planification initiales.

Cependant, ces systèmes d'aide à la navigation sont mis en oeuvre de façon locale sur le drone et de manière incrémentale uniquement lors de la mission du drone. De tels systèmes d'aide à la navigation ne permettent pas de favoriser dés le départ avant la mission un chemin aérien plutôt qu'un autre pour permettre à l'aéronef d'atteindre une position de destination prédéterminée.

Tel que divulgué dans l'article dénommé "A Bio-Inspired Goal-Directed Visual Navigation Model for Aerial Mobile Robots" rédigé par MAO JUN ET AL et publié en ligne le 12 mai 2020 sur le site du JOURNAL OF INTELLIGENT AND ROBOTIC SYSTEMS, KLUWER DORDRECHT, il est connu un procédé d'aide à la navigation basé sur la vision et destiné à être mis en oeuvre par des aéronefs autonomes.

Cet article divulgue notamment une génération d'un graphe comportant des noeuds et des arcs correspondant à un ensemble de points et de routes privilégiées de passage pour un aéronef, une planification d'une mission pour atteindre une position de destination et l'identification d'une position courante de l'aéronef dans le graphe au moyen d'images capturées en vol lors de la mission d'un aéronef.

Le calcul d'un chemin aérien au moyen du graphe est également divulgué pour aller de la position courante de l'aéronef jusqu'à la position de destination. En revanche, le calcul du chemin aérien est opéré sous la dépendance d'indices d'exploitabilité imagerie des noeuds du graphe en effectuant des acquisitions d'images en vol et en identifiant dans ces images des points remarquables au niveau des différents noeuds.

Ainsi, un tel procédé de navigation permet de réaliser une navigation à l'estime à l'aide d'un cap à suivre au départ d'un noeud et d'une vitesse de déplacement de l'aéronef sensiblement constante entre deux noeuds consécutifs. De plus, comme l'identification de la position courante est réalisée uniquement au niveau d'un noeud du graphe, un recalage de trajectoire éventuel n'est possible que ponctuellement au niveau de ce noeud.

De même, le document US 2016/003620 décrit un autre procédé d'aide à la navigation d'un voyageur au moyen d'un graphe comportant des noeuds et des arcs, chaque arc étant affecté d'un coût pour le parcourir.

En outre ce document ne permet pas le calcul d'un chemin aérien basé sur la vision sous la dépendance d'indices d'exploitabilité imagerie correspondant à la probabilité de satisfaire une étape d'identification d'une position courante sur le graphe.

Ainsi, la présente invention a alors pour objet de proposer un procédé et un système d'aide à la navigation alternatif permettant de s'affranchir des limitations mentionnées ci-dessus. Ce procédé d'aide à la navigation est en effet autonome et ne dépend donc pas de signaux électromagnétiques émis par des systèmes externes à l'aéronef tels que par exemple des satellites, des antennes de téléphonie mobile ou encore des antennes d'un protocole de communication sans fil tel que notamment le Wi-Fi.

Un autre but de l'invention est de permettre une planification d'un chemin aérien prédéterminé le plus sûr et adapté pour parvenir à une position de destination sans avoir recours à un système externe de localisation.

L'invention se rapporte donc à un procédé d'aide à la navigation d'un aéronef, le procédé comportant les étapes suivantes :
- génération d'un graphe comportant des noeuds et des arcs correspondant à un ensemble de points et de routes privilégiées de passage pour l'aéronef, chaque arc reliant deux noeuds entre eux et chaque noeud étant relié à au moins un autre noeud,
- stockage du graphe dans une mémoire embarquée sur l'aéronef,
- planification d'une mission pour atteindre une position de destination,
- identification d'une position courante de l'aéronef dans le graphe, l'étape d'identification de la position courante étant opérée au moyen d'images capturées en vol lors de la mission de l'aéronef, et
- calcul d'un chemin aérien au moyen du graphe pour aller de la position courante de l'aéronef jusqu'à la position de destination.

Ce procédé est remarquable en ce que chaque arc du graphe est affecté d'un indice d'exploitabilité imagerie permettant de quantifier une probabilité de satisfaire l'étape d'identification de la position courante, l'étape d'identification de la position courante étant réalisée à tout instant sur l'un des arcs du graphe agencé entre deux noeuds consécutifs et en ce que le calcul d'un chemin aérien est opéré sous la dépendance des indices d'exploitabilité imagerie des arcs.

Autrement dit, un tel procédé d'aide à la navigation réalise une identification de la position courante en effectuant une acquisition en vol d'une pluralité d'images. Les images sont ensuite analysées pour identifier des points remarquables, également désignés « amers », dont les coordonnées sont connues. Ces coordonnées sont alors mémorisées dans la mémoire embarquée sur l'aéronef.

Ces images capturées en vol sont alors analysées pour identifier des points remarquables, dont les coordonnées sont connues dans un repère. De telles coordonnées sont mémorisées dans une mémoire embarquée sur l'aéronef qui peut être confondue ou distincte de la mémoire permettant le stockage du graphe. Par exemple les coordonnées peuvent être par exemple des coordonnées géographiques telles une latitude et une longitude du repère terrestre.

Le graphe peut alors être rapporté dans le repère comportant les coordonnées des points remarquables. De plus, en connaissant les coordonnées de deux points remarquables, il est ainsi possible de calculer la distance de manière usuelle séparant ces deux points. Par exemple, l'analyse des images permet en effet de mesurer une distance séparant ces deux points sur ces images et d'en déduire par une règle de proportionnalité, des calculs vectoriels et/ou trigonométriques, la distance séparant ces points de l'aéronef et donc les coordonnées correspondant à la position courante de l'aéronef.

Un tel procédé est alors généré de manière autonome sur l'aéronef et permet à tout instant de déterminer la position courante de l'aéronef sur un arc du graphe en suivant le chemin aérien préalablement calculé. L'identification de la position courante sur les arcs permet de constamment identifier une multitude de points remarquables et donc d'améliorer la probabilité de satisfaire à tout instant l'identification de la position courante dans le graphe et donc le suivi du chemin aérien. Un recalage de la trajectoire suivie par l'aéronef est alors réalisé à tout instant.

Un tel procédé d'aide à la navigation est alors indépendant de tout signal extérieur et présente par conséquent un niveau de fiabilité très élevé par rapport aux autres procédés d'aide à la navigation connus.

Par ailleurs, comme les arcs peuvent représenter et s'étendre sur de longues distances, le suivi du chemin aérien peut être garanti même dans des conditions de vision limitée comme par exemple la nuit, par temps de brouillard ou de pluie.

Ainsi, un tel procédé d'aide à la navigation permet d'éviter toute déviation de l'aéronef de son chemin aérien quelles que soit les conditions de visibilité.

En outre, ce procédé peut comporter une ou plusieurs des caractéristiques qui suivent.

Avantageusement, les indices d'exploitabilité imagerie étant compris entre 0 et 1, l'étape de calcul d'un chemin aérien peut privilégier les arcs présentant les indices d'exploitabilité imagerie les plus grands.

Autrement dit, pour chaque chemin aérien possible, le procédé additionne les indices d'exploitabilité imagerie des différents arcs et peut alors sélectionner ou proposer à la sélection le chemin aérien affecté du plus grand score. Un tel chemin aérien est alors considéré comme étant celui le plus sûr pour une navigation de l'aéronef basée sur la vision.

Ce premier chemin aérien privilégié peut donc être généré au sol avant une mission de l'aéronef. En outre, si pour une raison particulière telle que par exemple la présence d'un obstacle nouveau ou non répertorié, le pilote de l'aéronef décide de s'écarter de ce premier chemin aérien, le procédé peut alors calculer en vol un nouveau chemin aérien au moyen du graphe pour aller d'une position courante de l'aéronef jusqu'à une position de destination prédéterminée.

De même, le pilote peut également choisir de modifier en vol la position de la destination prédéterminée de sa mission. Dans ce cas, le procédé peut alors calculer en vol un nouveau chemin aérien au moyen du graphe pour aller d'une position courante de l'aéronef jusqu'à la nouvelle position de destination.

En outre selon un premier exemple de réalisation de l'invention, l'étape de génération d'un graphe peut être réalisée au moyen de données d'imagerie.

Par suite, l'étape de génération du graphe peut utiliser des techniques d'analyses d'images par ordinateur pour définir d'une part des zones d'obstacles pour ce type de navigation basée sur la vision et d'autre part pour définir des zones propices à ce type de navigation. Des algorithmes de cartographie sont alimentés par des images fournies par exemple par une base de données d'images préalablement acquises par un aéronef, par des images satellitaires ou tout autre moyen.

Ces images ou des vues aériennes constituent alors des données permettant d'identifier des points d'intérêts, des caractéristiques visuelles intéressantes ou des amers qui seront utilisés ensuite lors de l'étape d'identification de la position courante de l'aéronef. Les amers préalablement géolocalisés sont avantageusement utilisés pour permettre de localiser la position courante de façon précise et pour réduire une erreur éventuelle de dérivation du chemin aérien.

Différentes méthodes de reconnaissance d'amers sont connues depuis quelques années.

On peut notamment citer une méthode connue sous l'expression en langue anglaise dite de « Landmark Fingerprinting » des auteurs Mikael Mannberga et AI Savvaris. D'autres méthodes, consistant notamment à effectuer des regroupement d'amers, sont également connues sous les expressions en langue anglaise dites de « Object recognition based on ORB and self-adaptative kernel clustering algorithm » des auteurs Zhang et Miao, « Automatic landmark selection for UAV autonomous navigation » des auteurs Melo, Filho et Shiguemori, « Automatic landmark selection based on feature clustering for UAV Navigation » des auteurs Filho et Shiguemori, « UAV Visual autolocalization based on automatic landmark recognition » des auteurs P.S. Filho, E.H. Shiguemori et O. Saotome ou encore « Aerial vehicle localization using generic landmarks » des auteurs Mark P.DeAngelo et Joseph F.Horn. Toutes ces méthodes démontrent que la quantité de points d'intérêt est une information importante pour la navigation basée sur la vision.

En outre selon ce premier exemple de réalisation de l'invention, l'étape de génération du graphe peut dès lors être réalisée au sol préalablement à la mission de l'aéronef en fonction d'une position de départ et d'une position de destination prédéterminées.

Un tel graphe peut par exemple comporter une matrice en trois dimensions ou encore une superposition d'une pluralité de graphes en deux dimensions. Une étape de fusion permet alors de fusionner un premier ensemble formé par des graphes 2D avec un deuxième ensemble formé par des arcs de raccordement, l'étape de fusion générant un graphe 3D non-orienté en trois dimensions permettant ensuite de générer un chemin aérien pour l'aéronef.

Par exemple, les graphes 2D peuvent présenter un maillage adaptatif de type« quadtree » tels que notamment divulgués par le demandeur dans le document FR3080678.

Par ailleurs selon un deuxième exemple de réalisation de l'invention, l'étape de génération d'un graphe peut être réalisée au moyen des images capturées en vol lors de la mission de l'aéronef.

Dans ce cas, le procédé peut constamment mettre à jour le graphe en utilisant des algorithmes de cartographie alimentés par des images fournies par des caméras embarquées sur l'aéronef lors de sa mission.

Selon un troisième exemple de réalisation de l'invention, l'étape de génération d'un graphe peut être réalisée au moyen de modèles numériques de terrain.

Par exemple, un modèle numérique de terrain peut être constitué d'une carte de type « raster » permettant de connaître, selon une certaine résolution et selon un maillage régulier appliqué à la surface de la terre, l'altitude sur chaque cellule. La taille des cellules est prédéterminée et s'appelle la résolution spatiale. À chaque cellule correspond une valeur représentant l'altitude de la zone.

Selon un quatrième exemple de réalisation de l'invention, l'étape de génération d'un graphe peut être réalisée au moyen d'une base de données du type système d'information géographique.

Le graphe peut alors comporter des couches vectorielles représentant les routes, les zones d'eau, les bâtiments, les occupations des sols, etc... Ces différentes entités géographiques sont représentées par des objets géométriques tels que par exemple des points, des lignes, ou des polygones. Elles sont définies par leurs coordonnées dans un système de projection du graphe.

Avantageusement les différents exemples de réalisation de l'invention peuvent être combinés entre eux. Dans ce cas, l'étape de génération d'un graphe peut être réalisée à la fois au moyen de données d'imagerie, de modèles numériques de terrain et d'une base de données du type système d'information géographique.

Autrement dit, le graphe peut être généré en combinant entre elles les différentes sources de données précédemment décrites. Un tel graphe est alors particulièrement riche en information et permet à l'aéronef de sélectionner un chemin aérien en privilégiant une navigation « basé vision » qui soit le plus sûr possible en l'absence de tout autre procédé d'aide à la navigation.

Selon un autre exemple de réalisation, les indices d'exploitabilité imagerie peuvent être calculés en fonction d'au moins un paramètre choisi parmi le groupe comportant un niveau de texture de zones du graphe, un nombre de données d'imagerie comprises dans les zones du graphe, un niveau de confiance de reconnaissance des données d'imagerie, une existence d'une relation spatiale entre les données d'imagerie, une altitude correspondant à la position courante de l'aéronef et des conditions vol de la mission.

Un ou plusieurs de ces paramètres peuvent ainsi permettre au procédé d'aide à la navigation de calculer les indices d'exploitabilité imagerie de chaque arc du graphe. Bien entendu, plus le nombre de paramètres utilisés simultanément est élevé et plus les indices d'exploitabilité imagerie sont forts et le procédé d'aide à la navigation est sûr et efficace.

Selon un tel procédé d'aide à la navigation basé sur la vision, l'expression « niveau de texture d'une zone du graphe » se rapporte à une région du graphe qui peut être plus ou moins texturée visuellement c'est-à-dire présenter des variations de composition. Par exemple, une étendue d'eau, de sable ou de neige peut être visuellement uniforme et représenter un premier niveau de texture. En revanche, une étendue terrestre peut être très hétérogène visuellement et comporter par exemple à la fois de la terre, des rochers, des champs, des forets, des villes ... Une étendue terrestre peut ainsi correspondre à un second niveau de texture différent du premier niveau de texture.

L'invention se rapporte aussi à un système d'aide à la navigation d'un aéronef, ce système comportant :
- un générateur de graphe pour générer un graphe comportant des noeuds et des arcs correspondant à un ensemble de points et de routes privilégiées de passage pour l'aéronef, chaque arc reliant deux noeuds entre eux et chaque noeud étant relié à au moins un autre noeud,
- une mémoire embarquée sur l'aéronef pour stocker le graphe,
- un organe de planification configuré pour planifier une mission et pour saisir au moins une position de destination pour la mission,
- un moyen d'identification configuré pour identifier une position courante de l'aéronef dans le graphe, le moyen d'identification de la position courante de l'aéronef utilisant au moins des images capturées en vol lors de la mission de l'aéronef, et
- un calculateur configuré pour calculer un chemin aérien au moyen du graphe pour aller de la position courante de l'aéronef jusqu'à la position de destination.

Un tel système d'aide à la navigation est remarquable en ce que le générateur de graphe est configuré pour affecter à chaque arc du graphe un indice d'exploitabilité imagerie permettant de quantifier, pour le moyen d'identification, une probabilité d'identifier la position courante de l'aéronef, le moyen d'identification identifiant à tout instant la position courante de l'aéronef sur l'un des arcs du graphe agencé entre deux noeuds consécutifs et en ce que le calculateur calcule le chemin aérien sous la dépendance des indices d'exploitabilité imagerie des arcs.

Par conséquent, un tel système d'aide à la navigation peut en tout ou partie être agencé sur un aéronef. Eventuellement, le générateur de graphe peut être agencé dans une station au sol qui transmet le graphe dans une mémoire embarquée préalablement à la mission.

L'organe de planification peut par exemple comporter un clavier, une dalle ou un pavé à commande tactile permettant à un pilote de saisir la position de destination. En outre, un tel organe de planification peut présenter un écran permettant d'afficher une carte présentant des zones de poser ou des pistes d'atterrissage aptes à être sélectionnées manuellement par le pilote de l'aéronef.

Selon un exemple de réalisation particulier, le générateur de graphe, le moyen d'identification et le calculateur peuvent être disjoints les uns des autres.

Alternativement et selon un autre exemple de réalisation, le générateur de graphe, le moyen d'identification et le calculateur peuvent être confondus et ne former qu'une seule unité de traitement.

Une telle unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

En pratique, le système peut comporter au moins une caméra embarquée sur l'aéronef pour générer les images capturées en vol lors de la mission de l'aéronef.

De telles images sont alors avantageusement transmises à la mémoire embarquée pour être utilisées indifféremment par le générateur de graphe, par le moyen d'identification et/ou le calculateur.

Avantageusement, le système peut être embarqué sur l'aéronef.

Autrement dit, en plus de la mémoire embarquée, le générateur de graphe, l'organe de planification, le moyen d'identification et le calculateur sont également embarqués sur l'aéronef.

La présente invention a aussi pour objet un aéronef remarquable en ce qu'il comporte un système d'aide à la navigation d'un aéronef tel que précédemment décrit.

Un tel aéronef comporte ainsi un système d'aide à la navigation autonome ne dépendant pas de signaux électromagnétiques émis par d'autres systèmes externes à l'aéronef.

Selon un exemple de réalisation, l'aéronef comportant un système de géolocalisation par satellites, le système d'aide à la navigation peut être configuré pour pallier un dysfonctionnement du système de géolocalisation par satellites.

Un aéronef selon l'invention permet de fournir une connaissance a priori du terrain. L'aide à la navigation « basée vision » est alors sûre. En cas de perte des signaux émis par le système de géolocalisation par satellites, le système de navigation basée sur la vision selon l'invention peut utiliser le graphe embarqué. Dès la perte des signaux émis par le système de géolocalisation par satellites, ou l'apparition d'un évènement déclenchant le besoin de la navigation basée sur la vision, un chemin aérien optimal est calculé à partir du graphe en considérant la position courante de l'aéronef à l'instant où survient l'évènement indésirable.

En outre, un tel système d'aide à la navigation permet alors de pallier à un dysfonctionnement du système de géolocalisation par satellites ce qui a pour effet d'améliorer la sécurité à bord de l'aéronef.

En pratique, le système d'aide à la navigation peut être configuré pour s'interfacer avec une unité de commande permettant de piloter l'aéronef.

Ainsi, le système d'aide à la navigation basée sur la vision peut être intégré au sein d'une architecture de navigation déjà existante. Lors d'une perte d'un signal émis par le système de géolocalisation par satellites, le système d'aide à la navigation basée sur la vision peut alors s'interfacer avec par exemple un au moins des systèmes comprenant le système de commande de vol généralement désigné par l'expression en langue anglaise « Flight Management System », le pilote automatique de l'aéronef, l'équipage de l'aéronef, le système de gestion de l'aéronef généralement désigné par l'expression en langue anglaise « Vehicle Management System » et des algorithmes de vision.

Un tel aéronef comporte alors un outil intelligent multi-agents d'aide à la navigation. Cette relation permet de proposer en vol de nouveaux chemins aériens optimaux pour la navigation basée sur la vision.

L'invention et ses avantages apparaîtront avec plus de détails dans le cadre de la description qui suit avec des exemples donnés à titre illustratif en référence aux figures annexées qui représentent :
la figure 1, une vue de côté d'un aéronef conforme à l'invention,
la figure 2, un schéma illustrant un système d'aide à la navigation conforme à l'invention,
la figure 3, un graphe apte à être généré par le système d'aide à la navigation conforme à l'invention, et
la figure 4, un logigramme illustrant un procédé d'aide à la navigation conforme à l'invention.

Les éléments présents dans plusieurs figures distinctes sont affectés d'une seule et même référence.

Comme déjà évoqué l'invention concerne le domaine des systèmes d'aide à la navigation des aéronefs.

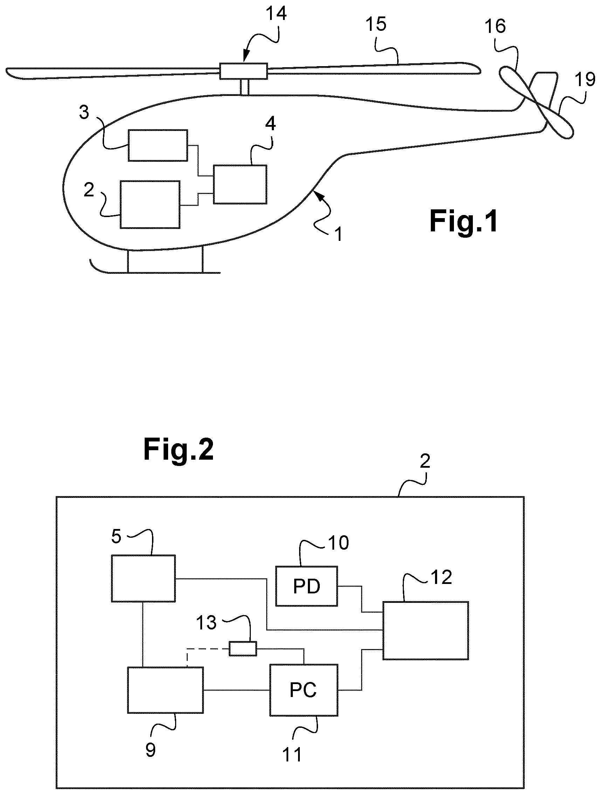

Tel que décrit à la figure 1, un aéronef 1 peut ainsi comporter un tel système 2 d'aide à la navigation. L'aéronef 1 comporte également un système de géolocalisation par satellites 3 permettant de recevoir des signaux émis par des satellites et d'en dédire une position courante de l'aéronef 1 dans un référentiel terrestre.

Le système 2 d'aide à la navigation et le système de géolocalisation par satellites 3 sont alors reliés par voie filaire ou non filaire avec une unité de commande 4 permettant de piloter l'aéronef 1.

Une telle unité de commande 4 peut notamment permettre de piloter des servocommandes aptes à déplacer des organes aérodynamiques de l'aéronef 1. Lorsque l'aéronef 1 est formé par un giravion tel que représenté à la figure 1, les organes aérodynamiques peuvent comporter des pales 15 d'un rotor principal 14 et des pales 19 d'un rotor arrière 16.

Par suite, le système 2 d'aide à la navigation peut s'intégrer à une architecture de navigation déjà existante d'un aéronef 1. Le système 2 d'aide à la navigation basée sur la vision peut ainsi s'interfacer avec le « Flight Management System », le pilote automatique, l'équipage de l'aéronef 1, le « Vehicle Management System » et les algorithmes de vision.

Le système 2 d'aide à la navigation peut également fournir une information de pilotage à un pilote de l'aéronef 1 de manière à lui indiquer un cap ou une direction privilégiée à suivre pour effectuer une mission.

Le système 2 d'aide à la navigation peut notamment être configuré pour pallier un dysfonctionnement d'un système de géolocalisation par satellites 3.

En outre, un tel système 2 peut également utiliser le graphe 6 pour créer, au moyen d'une logique à seuil, un espace interdit et un espace autorisé pour la navigation de l'aéronef 1 basée sur la vision.

Le système 2 permet alors également de générer un graphe en distance par rapport à cet espace autorisé.

Des algorithmes de gestion de graphes en trois dimensions de type « Algorithme D* ou A* » permettent de se focaliser sur le calcul du chemin optimal en termes de consommation d'énergie dans un environnement non coopératif à trois dimensions. Un tel type d'algorithme utilise alors un concept d'allocation de coût dynamique dans un axe vertical par rapport à l'aéronef 1.

Ce type d'algorithme permet ainsi une approche de planification de chemin aérien incrémentale pour calculer la route selon les mises à jour des informations de terrain. Cet algorithme léger peut être utilisé par un calculateur configuré pour calculer un chemin aérien.

En outre, ce calculateur est avantageusement embarqué sur l'aéronef 1.

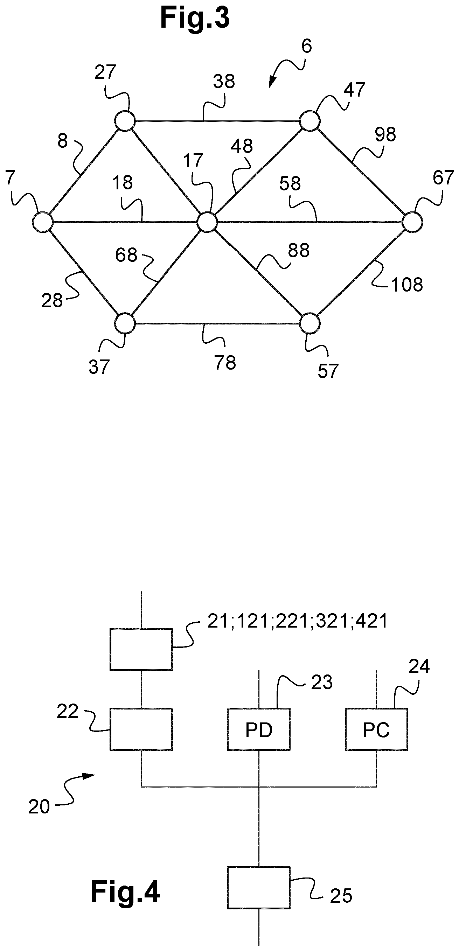

Tel que représenté à la figure 2, un tel système 2 d'aide à la navigation d'un aéronef 1 comporte un générateur de graphe 5 configuré pour générer à chaque mission de l'aéronef 1 un graphe 6 selon la figure 3.

Un tel graphe 6 comporte alors des noeuds 7, 17, 27 37, 47, 57, 67 et des arcs 8, 18, 28, 38, 48, 58, 68, 78, 88, 98, 108 correspondant à un ensemble de points et de routes privilégiées de passage pour l'aéronef 1. Chaque arc 8, 18, 28, 38, 48, 58, 68, 78, 88, 98, 108 relie deux noeuds 7, 17, 27 37, 47, 57, 67 entre eux et chaque noeud 7, 17, 27 37, 47, 57, 67 est alors relié à au moins un autre noeud 7, 17, 27 37, 47, 57, 67. Le noeud 7 peut par exemple former un point de départ et donc correspondre à la position courante PC de l'aéronef 1 avant d'effectuer sa mission et le noeud 67 une position de destination PD.

Un tel graphe 6 est ici représenté à des fins de simplification en vue de dessus et est donc en deux dimensions. Cependant, le graphe 6 est préférentiellement formé par un graphe en trois dimensions ou par une superposition d'une pluralité de graphes 2D reliés entre eux par un ensemble d'arcs.

Une fois le graphe 6 généré au sol préalablement à une mission de l'aéronef 1, ce graphe 6 est alors transmis par le générateur de graphe 5 à une mémoire 9 embarquée sur l'aéronef 1. Une telle mémoire 9 permet alors de stocker le graphe 6 pendant une mission de l'aéronef 1. Eventuellement, pendant la mission de l'aéronef 1, ce graphe 6 peut être modifié au moyen d'informations captées en vol et transmises au générateur de graphe 5.

Par ailleurs, le système 2 d'aide à la navigation comporte également un organe de planification 10 configuré pour planifier une mission et pour saisir au moins une position de destination PD pour cette mission.

Un tel organe de planification 10 peut par exemple comporter un clavier, une dalle ou un pavé à commande tactile permettant à un pilote de saisir la position de destination PD. En outre, un tel organe de planification 10 peut présenter un écran permettant d'afficher une carte présentant des zones de poser ou pistes d'atterrissage aptes à être sélectionnées manuellement par le pilote de l'aéronef 1.

Le système 2 d'aide à la navigation comporte aussi un moyen d'identification 11 configuré pour identifier une position courante PC de l'aéronef 1 dans le graphe 6.

Une caméra embarquée 13 est alors agencée sur l'aéronef 1 et permet de générer des images du milieu environnant à l'aéronef 1. Ces images sont ainsi capturées en vol lors de la mission de l'aéronef 1. Une telle caméra embarquée 13 est alors reliée par voie filaire ou non filaire au moyen d'identification 11 et/ou à la mémoire embarquée 9 de manière à pouvoir stocker ces images sur l'aéronef 1.

En outre, le système 2 d'aide à la navigation comporte un calculateur 12 configuré pour calculer un chemin aérien au moyen du graphe 6 pour aller de la position courante PC de l'aéronef 1 jusqu'à la position de destination PD. Un tel calculateur 12 peut notamment utiliser un algorithme permettant une approche de planification de chemin aérien incrémentale pour calculer la route selon les mises à jour des informations de terrain et est donc embarqué sur l'aéronef 1.

Un tel calculateur 12 est alors relié par voie filaire ou non filaire à la fois au générateur de graphe 5, à l'organe de planification 10 et au moyen d'identification 11.

Par ailleurs, le générateur de graphe 5 est configuré pour affecter à chaque arc 8, 18, 28, 38, 48, 58, 68, 78, 88, 98, 108 du graphe 6 un indice d'exploitabilité imagerie permettant de quantifier, pour le moyen d'identification 11, une probabilité d'identifier la position courante PC de l'aéronef 1. De plus, le moyen d'identification 11 de la position courante PC de l'aéronef 1 utilise au moins des images capturées en vol par la caméra embarquée 13 lors de la mission de l'aéronef 1.

Le générateur de graphe 5, le moyen d'identification 11 et le calculateur 12 peuvent être disjoints les uns des autres tels que représentés à la figure 2 et comprendre chacun par exemple au moins un processeur et au moins une mémoire, au moins un circuit intégré, au moins un système programmable, au moins un circuit logique, ces exemples ne limitant pas la portée donnée à aux expressions de « générateur de graphe », « moyen d'identification » et « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Alternativement, le générateur de graphe 5, le moyen d'identification 11 et le calculateur 12 peuvent être aussi confondus au sein d'une même unité de traitement.

Tel que représenté à la figure 3, le chemin aérien calculé par le calculateur 12 n'est pas nécessairement le chemin le plus court et peut par exemple passer successivement par les noeuds 7, 37, 57, 17, 47 et 67 pour atteindre la position de destination PD.

Dans ce cas, le chemin aérien formé par les arcs 28, 78, 88, 48 et 98 est celui qui permet une navigation basée sur la vision la plus sûre et donc qui présente la plus grande probabilité de satisfaire l'étape d'identification 24 de la position courante PC.

Telle que représentée à la figure 4, l'invention concerne également un procédé 20 d'aide à la navigation d'un aéronef 1.

Un tel procédé 20 comporte une étape de génération 21, 121, 221, 321, 421 d'un graphe 6 selon la figure 3 correspondant à un ensemble de points et de routes privilégiées de passage pour l'aéronef 1.

Selon un premier exemple de réalisation de l'invention, l'étape de génération 21 du graphe 6 peut être réalisée au moyen de données d'imagerie.

Selon un deuxième exemple de réalisation de l'invention, l'étape de génération 121 du graphe 6 peut être réalisée au moyen des images capturées en vol lors de la mission de l'aéronef 1.

Selon un troisième exemple de réalisation de l'invention, l'étape de génération 221 du graphe 6 peut être réalisée au moyen de modèles numériques de terrain.

Selon un quatrième exemple de réalisation de l'invention, l'étape de génération 321 du graphe 6 peut être réalisée au moyen d'une base de données du type système d'information géographique.

Selon un cinquième exemple de réalisation de l'invention, l'étape de génération 421 du graphe 6 peut être réalisée à la fois au moyen de données d'imagerie, de modèles numériques de terrain et d'une base de données du type système d'information géographique.

Une fois le graphe 6 généré, le procédé 20 comporte alors une étape de stockage 22 du graphe 6 dans la mémoire embarquée 9 sur l'aéronef 1.

En outre, le procédé 20 comporte également une étape de planification 23 d'une mission pour atteindre une position de destination PD et une étape d'identification 24 d'une position courante PC de l'aéronef 1 dans le graphe 6.

Le procédé 20 comporte ensuite alors une étape de calcul 25 d'un chemin aérien au moyen du graphe 6 pour aller de la position courante PC de l'aéronef 1 jusqu'à la position de destination PD.

En outre, l'ordre des étapes n'est pas imposé. Ainsi, il est possible d'effectuer en vol l'étape de génération 121 d'un graphe, notamment à des fins de mise à jour du graphe. Une telle mise à jour du graphe opérée en vol est opérée en série avec l'étape de stockage 22 du graphe 6 dans une mémoire embarquée sur l'aéronef 1. Cette étape de génération 121 du graphe 6 peut donc être effectuée après une étape de planification 23 d'une mission pour atteindre une position de destination PD et/ou après une étape d'identification 24 d'une position courante PC de l'aéronef 1 sur un arc 8, 18, 28, 38, 48, 58, 68, 78, 88, 98, 108 du graphe 6.

Par ailleurs, selon un tel procédé 20 d'aide à la navigation basée sur la vision, l'étape d'identification 24 d'une position courante PC de l'aéronef 1 sur un arc 8, 18, 28, 38, 48, 58, 68, 78, 88, 98, 108 et l'étape de calcul 25 d'un chemin aérien peuvent être mises en oeuvre en boucles de façon régulière et automatiquement avec une fréquence prédéterminée permettant ainsi d'effectuer à tout instant un recalage de la trajectoire réelle suivie par l'aéronef par rapport au chemin aérien.

Comme déjà évoqué, un tel graphe 6 est remarquable en ce que chaque arc 8, 18, 28, 38, 48, 58, 68, 78, 88, 98, 108 est affecté d'un indice d'exploitabilité imagerie permettant de quantifier une probabilité de satisfaire l'étape d'identification 24 de la position courante PC et en ce que l'étape d'identification 24 de la position courante PC est opérée au moyen d'images capturées en vol lors de la mission de l'aéronef 1.

En outre, les indices d'exploitabilité imagerie sont alors compris entre 0 et 1 et l'étape de calcul 25 d'un chemin aérien privilégie les arcs 8, 18, 28, 38, 48, 58, 68, 78, 88, 98, 108 présentant les indices d'exploitabilité imagerie les plus grands. L'étape de calcul 25 fait alors la somme de tous les chemins aériens possibles et peut alors permettre d'indiquer à un pilote un chemin aérien privilégiant la navigation basée sur la vision plutôt qu'un chemin aérien privilégiant la distance à parcourir la plus courte entre la position courante PC et la position de destination PD.

Les indices d'exploitabilité imagerie peuvent notamment être calculés en fonction d'au moins un paramètre choisi parmi le groupe comportant un niveau de texture de zones du graphe 6, un nombre de données d'imagerie comprises dans les zones du graphe 6, un niveau de confiance de reconnaissance des données d'imagerie, une existence d'une relation spatiale entre les données d'imagerie, une altitude correspondant à la position courante PC de l'aéronef 1 et des conditions vol de la mission.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé (20) d'aide à la navigation d'un aéronef (1), ledit procédé (20) comportant les étapes suivantes:
• génération (21, 121, 221, 321, 421) d'un graphe (6) comportant des noeuds (7, 17, 27 37, 47, 57, 67) et des arcs (8, 18, 28, 38, 48, 58, 68, 78, 88, 98, 108) correspondant à un ensemble de points et de routes privilégiées de passage pour ledit aéronef (1), chaque arc (8, 18, 28, 38, 48, 58, 68, 78, 88, 98, 108) reliant deux noeuds (7, 17, 27 37, 47, 57, 67) entre eux et chaque noeud (7, 17, 27 37, 47, 57, 67) étant relié à au moins un autre noeud (7, 17, 27 37, 47, 57, 67),
• stockage (22) dudit graphe (6) dans une mémoire embarquée sur ledit aéronef (1),
• planification (23) d'une mission pour atteindre une position de destination (PD),
• identification (24) d'une position courante (PC) dudit aéronef (1) dans ledit graphe (6), ladite étape d'identification (24) de ladite position courante (PC) étant opérée au moyen d'images capturées en vol lors de ladite mission dudit aéronef (1), et
• calcul (25) d'un chemin aérien au moyen dudit graphe (6) pour aller de ladite position courante (PC) dudit aéronef (1) jusqu'à ladite position de destination (PD),
**caractérisé en ce que** chaque arc (8, 18, 28, 38, 48, 58, 68, 78, 88, 98, 108) dudit graphe (6) est affecté d'un indice d'exploitabilité imagerie permettant de quantifier une probabilité de satisfaire ladite étape d'identification (24) de ladite position courante (PC), ladite étape d'identification (24) de ladite position courante (PC) étant réalisée à tout instant sur l'un desdits arcs (8, 18, 28, 38, 48, 58, 68, 78, 88, 98, 108) dudit graphe (6) agencé entre deux noeuds (7, 17, 27 37, 47, 57, 67) consécutifs et **en ce que** ledit calcul (25) d'un chemin aérien est opéré sous la dépendance des indices d'exploitabilité imagerie des arcs (8, 18, 28, 38, 48, 58, 68, 78, 88, 98, 108).

2. Procédé selon la revendication 1,
**caractérisé en ce que**, lesdits indices d'exploitabilité imagerie étant compris entre 0 et 1, ladite étape de calcul (25) d'un chemin aérien privilégie les arcs (8, 18, 28, 38, 48, 58, 68, 78, 88, 98, 108) présentant lesdits indices d'exploitabilité imagerie les plus grands.

3. Procédé selon l'une quelconque des revendications 1 à 2, **caractérisé en ce que** ladite étape de génération (21) d'un graphe (6) est réalisée au moyen de données d'imagerie.

4. Procédé selon l'une quelconque des revendications 1 à 3, **caractérisé en ce que** ladite étape de génération (121) d'un graphe (6) est réalisée au moyen desdites images capturées en vol lors de ladite mission dudit aéronef (1).

5. Procédé selon l'une quelconque des revendications 1 à 4, **caractérisé en ce que** ladite étape de génération (221) d'un graphe (6) est réalisée au moyen de modèles numériques de terrain.

6. Procédé selon l'une quelconque des revendications 1 à 5, **caractérisé en ce que** ladite étape de génération (321) d'un graphe (6) est réalisée au moyen d'une base de données du type système d'information géographique.

7. Procédé selon l'une quelconque des revendications 1 à 6, **caractérisé en ce que** lesdits indices d'exploitabilité imagerie sont calculés en fonction d'au moins un paramètre choisi parmi le groupe comportant un niveau de texture de zones dudit graphe (6), les zones se rapportant à des régions survolées plus ou moins texturées visuellement, un nombre de données d'imagerie comprises dans lesdites zones dudit graphe (6), un niveau de confiance de reconnaissance desdites données d'imagerie, une existence d'une relation spatiale entre lesdites données d'imagerie, une altitude correspondant à ladite position courante (PC) dudit aéronef (1) et des conditions vol de ladite mission.

8. Système (2) d'aide à la navigation d'un aéronef (1), ledit système (2) comportant :
• un générateur de graphe (5) pour générer un graphe (6) comportant des noeuds (7, 17, 27 37, 47, 57, 67) et des arcs (8, 18, 28, 38, 48, 58, 68, 78, 88, 98, 108) correspondant à un ensemble de points et de routes privilégiées de passage pour ledit aéronef (1), chaque arc (8, 18, 28, 38, 48, 58, 68, 78, 88, 98, 108) reliant deux noeuds (7, 17, 27 37, 47, 57, 67) entre eux et chaque noeud (7, 17, 27 37, 47, 57, 67) étant relié à au moins un autre noeud (7, 17, 27 37, 47, 57, 67),
• une mémoire (9) embarquée sur ledit aéronef (1) pour stocker ledit graphe (6),
• un organe de planification (10) configuré pour planifier une mission et pour saisir au moins une position de destination (PD) pour ladite mission,
• un moyen d'identification (11) configuré pour identifier une position courante (PC) dudit aéronef (1) dans ledit graphe (6), ledit moyen d'identification (11) de ladite position courante (PC) dudit aéronef (1) utilisant au moins des images capturées en vol lors de ladite mission dudit aéronef (1), et
• un calculateur (12) configuré pour calculer un chemin aérien au moyen dudit graphe (6) pour aller de ladite position courante (PC) dudit aéronef (1) jusqu'à ladite position de destination (PD),
**caractérisé en ce que** ledit générateur de graphe (5) est configuré pour affecter à chaque arc (8, 18, 28, 38, 48, 58, 68, 78, 88, 98, 108) dudit graphe (6) un indice d'exploitabilité imagerie permettant de quantifier, pour ledit moyen d'identification (11), une probabilité d'identifier ladite position courante (PC) dudit aéronef (1), ledit moyen d'identification (11) identifiant à tout instant la position courante (PC) dudit aéronef (1)sur l'un desdits arcs (8, 18, 28, 38, 48, 58, 68, 78, 88, 98, 108) dudit graphe (6) agencé entre deux noeuds (7, 17, 27 37, 47, 57, 67) consécutifs et **en ce que** ledit calculateur (12) calcule ledit chemin aérien sous la dépendance des indices d'exploitabilité imagerie desdits arcs (8, 18, 28, 38, 48, 58, 68, 78, 88, 98, 108).

9. Système selon la revendication 8,
**caractérisé en ce que** ledit système (2) comporte au moins une caméra embarquée (13) sur ledit aéronef (1) pour générer lesdites images capturées en vol lors de ladite mission dudit aéronef (1).

10. Système selon l'une quelconque des revendications 8 à 9, **caractérisé en ce que** ledit système (2) est embarqué sur ledit aéronef (1).

11. Aéronef (1) **caractérisé en ce que** ledit aéronef (1) comporte un système (2) d'aide à la navigation d'un aéronef selon l'une quelconque des revendications 8 à 10.

12. Aéronef selon la revendication 11,
**caractérisé en ce que**, ledit aéronef (1) comportant un système de géolocalisation par satellites (3), ledit système (2) d'aide à la navigation est configuré pour pallier un dysfonctionnement dudit système de géolocalisation par satellites (3).

13. Aéronef selon l'une quelconque des revendications 11 à 12 **caractérisé en ce que** ledit système (2) d'aide à la navigation est configuré pour s'interfacer avec une unité de commande (4) permettant de piloter ledit aéronef (1).

## Patentansprüche

1. Verfahren (20) zum Unterstützen der Navigation eines Luftfahrzeugs (1), wobei das Verfahren (20) die folgenden Schritte umfasst:
- Erzeugen (21, 121, 221, 321, 421) eines Graphen (6) mit Knoten (7, 17, 27, 37, 47, 57, 67) und Kanten (8, 18, 28, 38, 48, 58, 68, 78, 88, 98, 108), die einer Menge von Punkten und bevorzugten Flugrouten für das Luftfahrzeug (1) entsprechen, wobei jede Kante (8, 18, 28, 38, 48, 58, 68, 78, 88, 98, 108) zwei Knoten (7, 17, 27 37, 47, 57, 67) miteinander verbindet und jeder Knoten (7, 17, 27 37, 47, 57, 67) mit mindestens einem anderen Knoten (7, 17, 27 37, 47, 57, 67) verbunden ist,
- Speichern (22) des Graphen (6) in einem Speicher, der sich an Bord des Luftfahrzeugs (1) befindet,
- Planen (23) einer Mission zum Erreichen einer Zielposition (PD),
- Identifizieren (24) einer aktuellen Position (PC) des Flugzeugs (1) in dem Graphen (6), wobei der Schritt des Identifizierens (24) der aktuellen Position (PC) mit Hilfe von während des Fluges im Laufe der Mission des Flugzeugs (1) aufgenommenen Bildern durchgeführt wird, und
- Berechnen (25) eines Luftweges mittels des Graphen (6), um von der aktuellen Position (PC) des Luftfahrzeugs (1) zu der Zielposition (PD) zu gelangen,
**dadurch gekennzeichnet, dass** jede Kante (8, 18, 28, 38, 48, 58, 68, 78, 88, 98, 108) des Graphen (6) mit einem Bildauswertbarkeitsindex versehen ist, der es ermöglicht, eine Wahrscheinlichkeit seiner Brauchbarkeit für den Schritt des Identifizierens (24) der aktuellen Position (PC) zu quantifizieren, wobei der Schritt des Identifizierens (24) der aktuellen Position (PC) jederzeit auf einer der Kanten (8, 18, 28, 38, 48, 58, 68, 78, 88, 98, 108) des Graphen (6) durchgeführt wird, die zwischen zwei aufeinanderfolgenden Knoten (7, 17, 27, 37, 47, 57, 67) angeordnet ist, und dass das Berechnen (25) eines Luftweges in Abhängigkeit von den Bildauswertbarkeitsindizes der Kanten (8, 18, 28, 38, 48, 58, 68, 78, 88, 98, 108) durchgeführt wird.

2. Verfahren nach Anspruch 1,
**dadurch gekennzeichnet, dass** die Bildauswertbarkeitsindizes zwischen 0 und 1 liegen und der Schritt des Berechnens (25) eines Luftweges die Kanten (8, 18, 28, 38, 48, 58, 68, 78, 88, 98, 108) bevorzugt, die die höchsten Bildauswertbarkeitsindizes aufweisen.

3. Verfahren nach einem der Ansprüche 1 bis 2,
**dadurch gekennzeichnet, dass** der Schritt des Erzeugens (21) eines Graphen (6) unter Verwendung von Bilddaten durchgeführt wird.

4. Verfahren nach einem der Ansprüche 1 bis 3,
**dadurch gekennzeichnet, dass** der Schritt des Erzeugens (121) eines Graphen (6) mittels der während des Fluges im Laufe der Mission des Luftfahrzeugs (1) aufgenommenen Bilder durchgeführt wird.

5. Verfahren nach einem der Ansprüche 1 bis 4,
**dadurch gekennzeichnet, dass** der Schritt des Erzeugens (221) eines Graphen (6) unter Verwendung von digitalen Geländemodellen durchgeführt wird.

6. Verfahren nach einem der Ansprüche 1 bis 5,
**dadurch gekennzeichnet, dass** der Schritt des Erzeugens (321) eines Graphen (6) mittels einer Datenbank vom Typ eines geografischen Informationssystems durchgeführt wird.

7. Verfahren nach einem der Ansprüche 1 bis 6,
**dadurch gekennzeichnet, dass** die Bildauswertbarkeitsindizes in Abhängigkeit von mindestens einem Parameter berechnet werden, der aus der Gruppe ausgewählt wird, die ein Texturniveau von Zonen des Graphen (6), wobei sich die Zonen auf überflogene Regionen beziehen, die visuell mehr oder weniger texturiert sind, eine Anzahl von in den Zonen des Graphen (6) enthaltenen Bilddaten, ein Konfidenzniveau für die Erkennung der Bilddaten, das Vorhandensein einer räumlichen Beziehung zwischen den Bilddaten, eine der aktuellen Position (PC) des Luftfahrzeugs (1) entsprechende Höhe und Flugbedingungen der Mission umfasst.

8. System (2) zum Unterstützen der Navigation eines Luftfahrzeugs (1), wobei das System (2) umfasst:
- einen Graphengenerator (5) zum Erzeugen eines Graphen (6) mit Knoten (7, 17, 27, 37, 47, 57, 67) und Kanten (8, 18, 28, 38, 48, 58, 68, 78, 88, 98, 108), die einem Satz von Punkten und bevorzugten Flugrouten für das Luftfahrzeug (1) entsprechen, wobei jede Kante (8, 18, 28, 38, 48, 58, 68, 78, 88, 98, 108) zwei Knoten (7, 17, 27 37, 47, 57, 67) miteinander verbindet und jeder Knoten (7, 17, 27 37, 47, 57, 67) mit mindestens einem anderen Knoten (7, 17, 27 37, 47, 57, 67) verbunden ist,
- einen Speicher (9), der sich an Bord des genannten Luftfahrzeugs (1) befindet, um den genannten Graphen (6) zu speichern,
- eine Planungseinrichtung (10), die konfiguriert ist, um eine Mission zu planen und mindestens eine Zielposition (PD) für diese Mission zu erfassen,
- ein Identifikationsmittel (11), das konfiguriert ist, um eine aktuelle Position (PC) des Luftfahrzeugs (1) in dem Graphen (6) zu identifizieren, wobei das Identifikationsmittel (11) für die aktuelle Position (PC) des Luftfahrzeugs (1) mindestens während des Fluges im Laufe der Mission des Luftfahrzeugs (1) aufgenommene Bilder verwendet, und
- einen Rechner (12), der konfiguriert ist, um mittels des Graphen (6) einen Luftweg zu berechnen, um von der aktuellen Position (PC) des Luftfahrzeugs (1) zu der Zielposition (PD) zu gelangen,
**dadurch gekennzeichnet, dass** der Graphengenerator (5) konfiguriert ist, um jeder Kante (8, 18, 28, 38, 48, 58, 68, 78, 88, 98, 108) des Graphen (6) einen Bildauswertbarkeitsindex zuzuweisen, der es ermöglicht, für das Identifikationsmittel (11) eine Wahrscheinlichkeit zu quantifizieren, dass die aktuelle Position (PC) des Luftfahrzeugs (1) identifiziert wird, wobei das Identifikationsmittel (11) zu jedem Zeitpunkt die aktuelle Position (PC) des Luftfahrzeugs (1) auf einer der Kanten (8, 18, 28, 38, 48, 58, 68, 78, 88, 98, 108) des Graphen (6) identifiziert, die zwischen zwei aufeinanderfolgenden Knoten (7, 17, 27, 37, 47, 57, 67) liegt, und dass der Rechner (12) den Luftweg in Abhängigkeit von den Bildauswertbarkeitsindices der Kanten (8, 18, 28, 38, 48, 58, 68, 78, 88, 98, 108) berechnet.

9. System nach Anspruch 8,
**dadurch gekennzeichnet, dass** das System (2) mindestens eine an Bord des Luftfahrzeugs (1) befindliche Kamera (13) umfasst, um die während des Flugs im Laufe der Mission des Luftfahrzeugs (1) aufgenommenen Bilder zu erzeugen.

10. System nach einem der Ansprüche 8 bis 9,
**dadurch gekennzeichnet, dass** sich das System (2) an Bord des Luftfahrzeugs (1) befindet.

11. Luftfahrzeug (1), **dadurch gekennzeichnet, dass** das Luftfahrzeug (1) ein System (2) zum Unterstützen der Navigation eines Luftfahrzeugs nach einem der Ansprüche 8 bis 10 aufweist.

12. Luftfahrzeug nach Anspruch 11,
**dadurch gekennzeichnet, dass** das Luftfahrzeug (1) ein Satelliten-Geolokalisierungssystem (3) umfasst und das Navigationsunterstützungssystem (2) konfiguriert ist, um eine Funktionsstörung des Satelliten-Geolokalisierungssystems (3) zu kompensieren.

13. Luftfahrzeug nach einem der Ansprüche 11 bis 12,
**dadurch gekennzeichnet, dass** das Navigationsunterstützungssystem (2) konfiguriert ist, um mit einer Steuereinheit (4), mit der das Luftfahrzeug (1) steuerbar ist, eine Schnittstelle zu bilden.

## Claims

1. Method (20) for assisting the navigation of an aircraft (1), said method (20) comprising the following steps:
• generating (21, 121, 221, 321, 421) a graph (6) comprising nodes (7, 17, 27 37, 47, 57, 67) and arcs (8, 18, 28, 38, 48, 58, 68, 78, 88, 98, 108) corresponding to a set of preferred waypoints and routes for said aircraft (1), each arc (8, 18, 28, 38, 48, 58, 68, 78, 88, 98, 108) connecting two nodes (7, 17, 27 37, 47, 57, 67) to each other and each node (7, 17, 27 37, 47, 57, 67) being connected to at least one other node (7, 17, 27 37, 47, 57, 67),
• storing (22) said graph (6) in a memory installed on board said aircraft (1),
• planning (23) a mission to reach a destination position (PD),
• identifying (24) a current position (PC) of said aircraft (1) in said graph (6), said step of identifying (24) said current position (PC) being carried out by means of images captured in flight during said mission of said aircraft (1), and
• calculating (25) a flight path by means of said graph (6), in order to move from said current position (PC) of said aircraft (1) to said destination position (PD),
**characterized in that** each arc (8, 18, 28, 38, 48, 58, 68, 78, 88, 98, 108) of said graph (6) is assigned an image usability index making it possible to quantify a probability of satisfying said step (24) of identifying said current position (PC), said step (24) of identifying said current position (PC) being carried out at any time on one of said arcs (8, 18, 28, 38, 48, 58, 68, 78, 88, 98, 108) of said graph (6) arranged between two consecutive nodes (7, 17, 27 37, 47, 57, 67), and **in that** said calculation (25) of a flight path is carried out depending on the image usability indices of the arcs (8, 18, 28, 38, 48, 58, 68, 78, 88, 98, 108).

2. Method according to Claim 1,
**characterized in that**, with said image usability indices range from 0 to 1, said step of calculating (25) a flight path prioritizes the arcs (8, 18, 28, 38, 48, 58, 68, 78, 88, 98, 108) with the highest image usability indices.

3. Method according to any one of Claims 1 to 2,
**characterized in that** said step of generating (21) a graph (6) is carried out using imaging data.

4. Method according to any one of Claims 1 to 3,
**characterized in that** said step of generating (121) a graph (6) is carried out by means of said images captured in flight during said mission of said aircraft (1).

5. Method according to any one of Claims 1 to 4,
**characterized in that** said step of generating (221) a graph (6) is carried out by means of digital terrain models.

6. Method according to any one of Claims 1 to 5,
**characterized in that** said step of generating (321) a graph (6) is carried out by means of a geographic information system database.

7. Method according to any one of Claims 1 to 6,
**characterized in that** said image usability indices are calculated based on at least one parameter selected from the group comprising a texture level of zones in said graph (6), the zones relating to overflown regions that are more or less visually textured, a number of imaging data items included in said zones of said graph (6), a confidence level in the recognition of said imaging data, the existence of a spatial relationship between said imaging data items, an altitude corresponding to said current position (PC) of said aircraft (1) and flight conditions of said mission.

8. System (2) for assisting the navigation of an aircraft (1), said system (2) comprising:
• a graph generator (5) for generating a graph (6) comprising nodes (7, 17, 27 37, 47, 57, 67) and arcs (8, 18, 28, 38, 48, 58, 68, 78, 88, 98, 108) corresponding to a set of preferred waypoints and routes for said aircraft (1), each arc (8, 18, 28, 38, 48, 58, 68, 78, 88, 98, 108) connecting two nodes (7, 17, 27 37, 47, 57, 67) to each other and each node (7, 17, 27 37, 47, 57, 67) being connected to at least one other node (7, 17, 27 37, 47, 57, 67),
• a memory (9) installed on board said aircraft (1) for storing said graph (6),
• a planning device (10) configured to plan a mission and to input at least one destination position (PD) for said mission,
• an identification means (11) configured to identify a current position (PC) of said aircraft (1) in said graph (6), said means for identifying (11) said current position (PC) of said aircraft (1) using at least images captured in flight during said mission of said aircraft (1) and
• a calculator (12) configured to calculate a flight path by means of said graph (6), in order to move from said current position (PC) of said aircraft (1) to said destination position (PD),
**characterized in that** said graph generator (5) is configured to assign to each arc (8, 18, 28, 38, 48, 58, 68, 78, 88, 98, 108) of said graph (6) an image usability index making it possible to quantify, for said identification means (11), a probability of identifying said current position (PC) of said aircraft (1), said identification means (11) identifying at any time the current position (PC) of said aircraft (1) on one of said arcs (8, 18, 28, 38, 48, 58, 68, 78, 88, 98, 108) of said graph (6) arranged between two consecutive nodes (7, 17, 27 37, 47, 57, 67) and **in that** said calculator (12) calculates said flight path depending on the image usability indices of said arcs (8, 18, 28, 38, 48, 58, 68, 78, 88, 98, 108).

9. System according to Claim 8,
**characterized in that** said system (2) comprises at least one on-board camera (13) on said aircraft (1), in order to generate said images captured in flight during the mission of said aircraft (1).

10. System according to any one of Claims 8 to 9,
**characterized in that** said system (2) is installed on board said aircraft (1).

11. Aircraft (1) **characterized in that** said aircraft (1) comprises a navigation assistance system (2) for an aircraft according to any one of Claims 8 to 10.

12. Aircraft according to Claim 11,
**characterized in that**, said aircraft (1) comprising a satellite positioning system (3), said navigation assistance system (2) is configured to compensate for a malfunction of said satellite positioning system (3).

13. Aircraft according to any one of Claims 11 to 12,
**characterized in that** said navigation assistance system (2) is configured to interface with a control unit (4) for piloting said aircraft (1).
